# EUROPÄISCHE PATENTANMELDUNG

(11) **EP 3 446 586 A1**
(43) Veröffentlichungstag der Anmeldung: **27.02.2019**
(21) Anmeldenummer: 18189155.7
(22) Anmeldetag: 15.08.2018
(51) Int. Cl.: A43B 5/04, A43B 7/28, B29D 35/06

(54) **SOCKE UND VERFAHREN ZUM HERSTELLEN EINER SOCKE**

(30) Priorität: 23.08.2017 CH 10462017
(71) Anmelder: BOURQUIN DEVELOPMENT & DESIGN AG, 6345 Neuheim (CH)
(72) Erfinder: BOURQUIN, Thierry, 6330 Cham (CH)
(74) Vertreter: Troesch Scheidegger Werner AG

(57) **Zusammenfassung**

Bereitgestellt wird ein Verfahren zum Herstellen einer Socke (1), bei welchem eine Textilhülle (11) mindestens teilweise über einen Fuss (10) oder ein Fuss-Modell (10) gestülpt wird, eine schuhförmige Hohlform (20) bereitgestellt wird, der in die Textilhülle (11) gestülpte Fuss (10) bzw. das in die Textilhülle (11) gestülpte Fuss-Modell (10) in der Hohlform (20) positioniert wird, die Hohlform (20) mindestens teilweise mit einem Füllmaterial (30) ausgefüllt wird, die Hohlform (20) gelöst wird und die Textilhülle (11) mit dem Füllmaterial (30) die Socke (1) bildend entnommen wird. Weiter bereitgestellt wird eine Socke (1) und ein Schuh mit einer Socke (1).

## Beschreibung

Die vorliegende Erfindung betrifft eine Socke zum Tragen in einem Schuh und ein Herstellungsverfahren für eine solche Socke.

Auch wenn sich das vorhandenen Angebot an Schuhen in den letzten Jahrzenten gravierend vergrössert hat und es mittlerweile Schuhe in den verschiedensten Formen, Farben und Grössen gibt, so handelt es sich am Schluss doch um Massenware, die nicht angepasst ist an die individuellen Bedürfnisse des einzelnen Trägers. Zwar gibt es inzwischen Hersteller, die manche ihrer Modelle in unterschiedlichen Breiten anbieten, wie z.B. in normaler Breite und Komfort-Breite, jedoch kann hier nicht von einer tatsächlichen Anpassung an die individuellen Bedürfnisse des einzelnen Trägers die Rede sein, wird doch lediglich die Fussbreite berücksichtigt. Alternativ kann der Träger eine Anpassung des Schuhwerks mithilfe von massengefertigten Einlegesohlen vornehmen. Im Winter kann beispielsweise eine wärmende Lammfellsohle und im Sommer eine mit Silberionen ausgerüstete Sohle gegen Fussgeruch in den Schuh eingelegt werden. Weiter stehen noch orthopädische Einlegesohlen für diverse medizinische Leiden, wie Fussfehlstellungen (z.B. Hallux valgus, Senkfüsse, Spreizfüsse, etc.) oder dergleichen zur Verfügung. Diese können individuell vom Orthopäden angepasst werden und haben zum Ziel, den Fuss zu unterstützen oder die Fehlhaltung auszugleichen, nicht aber unbedingt den Tragekomfort zu verbessern. Ausserdem werden diese Sohlen meist für ein spezielles Paar Schuhe angefertigt und können nur in dieses eingelegt werden. Wintersportlern können noch von der Möglichkeit Gebrauch machen, ihre Skistiefel individuell anpassen zu lassen. Solche Verfahren lassen sich jedoch nur anwenden auf Schuhwerk, welches analog zu einem Skistiefel aufgebaut ist, sprich aus einer harten Aussenschale und einem Innenschuh, und können daher nicht übertragen werden auf anderes Schuhwerk, wie z.B. Laufschuhe, Wanderschuhe, Halbschuhe, Mokassins und dergleichen.
Für eine tatsächliche individuelle Anpassung muss folglich nach wie vor auf die Massanfertigung zurückgegriffen werden, welche jedoch ihren Preis hat. Einen Preis, der bei weitem nicht mit demjenigen der Massenware vergleichbar ist.

Die Aufgabe der vorliegenden Erfindung besteht darin, den Tragekomfort von Schuhen kosteneffizient zu erhöhen.
Diese Aufgabe wird gelöst durch ein erstes Verfahren zum Herstellen einer Socke. Bei diesem Verfahren wird eine schuhförmige Hohlform bereitgestellt, eine Textilhülle mindestens teilweise über einen Fuss oder ein Fuss-Modell gestülpt, der in die Textilhülle gestülpte Fuss bzw. das in die Textilhülle gestülpte Fuss-Modell in der Hohlform positioniert, die Hohlform mindestens teilweise mit einem Füllmaterial ausgefüllt, die Hohlform gelöst und die Textilhülle mit dem Füllmaterial die Socke bildend entnommen.

Die schuhförmige Hohlform kann dabei der Form desjenigen Schuhtyps entsprechen, für den der Träger die Socke verwenden möchte. Dies kann z.B. die Form eines Stiefels, eines Bergschuhs, eines Sportschuhs, eines Halbschuhs, eines Pumps, eines Ballerinas etc. sein. Insbesondere kann die durch die Hohlform definierte Form dem Innenraum desjenigen Schuhtyps oder Schuhs entsprechen, für den der Träger die Socke verwenden möchte.
Die Textilhülle, die über den Fuss oder ein Fuss-Modell gestreift wird, ist beispielsweise einwandig und/oder aus Baumwolle, Polyamid, Polyester, Elasthan, Polyacryl, Viskose, Wolle etc. oder einer Mischung dieser Materialien. Einwandig bedeutet hier, dass die Socke nicht aus zwei oder mehreren Schichten besteht zwischen denen sich ein Zwischenraum bilden kann, welcher beispielsweise mit Füllmaterial gefüllt werden kann. Von Vorteil ist, wenn für die Textilhülle ein Material oder eine Materialmischung gewählt wird, die atmungsaktiv ist, den Abtransport von Feuchtigkeit zulässt und diese nur bedingt speichert. Weiter kann die Textilhülle auch einlagig oder mindestens teilweise mehrlagig ausgebildet sein, wobei die einzelnen Lagen mindestens teilweise miteinander verbunden sind, insbesondere überwiegend oder gar vollständig miteinander verbunden. Bei einer mehrlagigen Socke sind die einzelnen Lagen bevorzugt so angeordnet, dass sich zwischen den Lagen kein oder nur ein sehr kleiner Zwischenraum bildet, welcher nicht dazu ausgelegt ist mit Füllmaterial befüllt zu werden. Bei der Ausführung des Verfahrens kann entweder eine Standard-Textilhülle verwendet werden, oder dem Träger die Möglichkeit gegeben werden, bereits schon die Textilhülle nach seinen individuellen Bedürfnissen auszuwählen. Der Träger entscheidet, welches Material oder welche Materialmischung ihm angenehm ist, welche Farbe er wünscht, welche Dicke die Textilhülle haben soll, ob die Textilhülle homogen oder an manchen Stellen andersartig in Bezug auf Dicke, Materialwahl etc. ausgebildet sein soll usw. Was die Form der Textilhülle anbelangt, so kann diese angelehnt sein an die anatomische Form der menschlichen Füsse und weiter in verschiedenen Grössen bereitgestellt werden, sodass für jeden Träger eine passende Textilhülle gefunden werden kann. Bevorzugt hat die Textilhülle elastische Eigenschaften, sodass sie ohne Falten zu werfen über den Fuss bzw. das Fuss-Modell stülpbar ist. Darüber hinaus kann sich in der Textilhülle auch schon die Form des Schuhtyps wiederspiegeln, für den der Träger die Socke verwenden möchte. Für Ballerinas kommt z.B. eine Textilhülle in Form eines Füsslings in Frage und für einen Halbschuh kann die Textilhülle angelehnt sein an die sogenannte Sneakersocke. Der Stülpvorgang selbst kann manuell oder automatisiert erfolgen.
Nachdem die Textilhülle dann über den Fuss bzw. das Fuss-Modell gestülpt wurde, wird der Fuss bzw. das Fuss-Modell in die bereitgestellte Hohlform eingebracht. Ist die Hohlform einteilig, so weist sie eine Öffnung auf, über welche der Fuss bzw. das Fuss-Modell in die Hohlform eingebracht werden kann. Die Öffnung findet sich an derjenigen Stelle, an der sich beim entsprechenden Schuhtyp, welcher durch die Hohlform repräsentiert wird, auch die Öffnung zum Reinschlüpfen befindet. Bevorzugt ist die Hohlform aber mindestens zweiteilig ausgebildet und besteht aus mindestens zwei lösbar verbindbaren Teilen. So lässt sich die Form leicht öffnen und schliessen und der Fuss bzw. das Fuss-Modell einfach einbringen. Der Fuss bzw. das Fuss-Modell wird bevorzugt so positioniert, dass rundherum ein Hohlraum bestehen bleibt. Der Fuss bzw. das Fuss-Modell stösst nicht an die Hohlform, sondern ist beabstandet zu dieser. Eine mehrteilige Hohlform kann, muss aber nicht in sich geschlossen sein. Das Füllmaterial wird, je nach Ausführung der Hohlform, entweder über die Öffnung eingebracht, über welche auch schon der Fuss bzw. das Fuss-Modell eingebracht wurde, oder über extra Einfüllöffnungen, welche bevorzugt deutlich kleiner sind als eine Öffnung, über welche der Fuss bzw. das Fuss-Modell eingebracht werden kann, und welche sich bspw. an dem die Fusssohle, die Ferse und/oder die Zehen repräsentierenden Teil der Hohlform befinden. Weiter kann die Hohlform Auslassöffnungen zum Auslassen von überschüssigem Füllmaterial, verdrängter Luft oder austretendem Gas (z.B. Schäumungsmittel) umfassen. Das Füllmaterial ist bevorzugt ein Fluid, z.B. ein fliessfähiger Schaum, welches mit der Zeit, chemisch indiziert und/oder physikalisch indiziert härtet, trocknet oder polymerisiert und dadurch eine Konsistenz- bzw. Beschaffenheitsänderung erfährt. Ist eine solche Konsistenz- bzw. Beschaffenheitsänderung dann erfolgt, zumindest bis zu einem Grad, an dem das Füllmaterial nicht mehr fliessfähig ist, kann die Hohlform gelöst werden. Je nach Hohlform bedeutet dies, dass die Hohlform geöffnet wird, oder die Hohlform vom Füllmaterial gelöst wird bspw. durch Bewegen des mindestens teilweise erhärteten und/oder getrockneten aber flexiblen Füllmaterials. Entnommen werden die Textilhülle and das Füllmaterial, welche zusammen die Socke bilden.

Die Aufgabe wird weiter gelöst durch ein zweites Verfahren zum Herstellen einer Socke. Bei diesem Verfahren wird eine schuhförmige Hohlform bereitgestellt, ein Fuss bzw. ein Fuss-Modell in der Hohlform positioniert, die Hohlform mindestens teilweise mit einem Füllmaterial ausgefüllt, die Hohlform gelöst, das Füllmaterial entnommen und eine Textilhülle in das Innere des Füllmaterials eingebracht. Bevorzugt wird die in das Innere des Füllmaterials eingebracht Textilhülle mit dem Füllmaterial verbunden.
Das zweite Verfahren wird bevorzugt in der eben beschriebenen Reihenfolge ausgeführt. Die Textilhülle kann ausgebildet sein, wie bereits in Zusammenhang mit dem ersten Verfahren beschrieben. Selbiges gilt für die Hohlform und das Einbringen des Füllmaterials bzw. das Füllmaterial selbst. Indem erst eine Art "Rohsocke" nur aus Füllmaterial bestehend gebildet wird und die eigentliche Socke erst durch Einbringen der Textilhülle in die Rohsocke entsteht, kann vermieden werden, dass Füllmaterial in die Textilhülle dringt bzw. dieses gar durchtränkt. Somit kann eine nach dem zweiten Verfahren hergestellte Socke einen höheren Tragekomfort besitzen, da der Träger ausschliesslich in direkten Kontakt mit der Textilhülle und nicht mit dem Trägermaterial kommt.

In einer erfindungsgemässen Ausführungsform des ersten bzw. des zweiten Verfahrens, welche mit jeder der noch zu nennenden Ausführungsformen kombiniert werden kann, sofern nicht im Widerspruch dazu, wird der Fuss bzw. das Fuss-Modell respektive der in die Textilhülle gestülpte Fuss bzw. das in die Textilhülle gestülpte Fuss-Modell kontrolliert in der Hohlform positioniert.
Kontrolliert positioniert meint hierbei insbesondere, dass sichergestellt wird, dass zwischen dem Fuss bzw. dem Fuss-Modell und der Hohlform ein Zwischenraum bestehen bleibt, der mit Füllmaterial gefüllt werden kann. Der Zwischenraum ist in einer Ausführungsvariante nicht unterbrochen durch Kontaktstellen zwischen Fuss bzw. Fuss-Modell und Hohlform. In einer andern Ausführungsvariante weisst die Hohlform wiederum Vorsprünge auf, welche zur Positionierung des Fusses bzw. Fuss-Modells dienen. Solche Vorsprünge können bspw. sogenannte Positionierungszapfen sein, die insbesondere verhindern, dass der Fuss bzw. das Fuss-Modell während dem Einbringen des Füllmaterials in der Hohlform verrutscht und so zu einer ungewünschten Verteilung des Füllmaterials führt. Wenn die Positionierungszapfen den sich in der Hohlform befindlichen Fuss bzw. das Fuss-Modell berühren bzw. daran anstossen, so sorgen sie an diesen Kontaktstellen später in der Socke für Perforierungen, welche wiederum für eine Durchlüftung sorgen. Sollte dennoch ein wenig Füllmaterial zwischen Fuss bzw. Fuss-Modell und Vorsprung gelangt sein und so zu einer verstopften Perforation führen, kann diese z.B. mit einer Stanzzange nachbearbeitet werden. Die Positionierungszapfen können beispielsweise eine Länge von ca. 4 mm aufweisen, einen Durchmesser von ca. 2mm aufweisen, und/oder sich an den folgenden Stellen in z.B. Zweiergruppen, Dreiergruppen etc. befinden: Ferse, Fussballen, Rist, Achillesverse, linker Knöchel und/oder rechter Knöchel.
Weiter kann kontrolliert positioniert bedeuten, dass der Fuss bzw. das Fuss-Modell an die Bedürfnisse des Trägers angepasst positioniert wird. Bei einem Fersensporn kann z.B. der Fuss bzw. das Fuss-Modell etwas höher in der Hohlform positioniert werden, sodass der Abstand zwischen Hohlform Fussunterseite bzw. Fuss-Modell-Unterseite grösser ist und die gefertigte Socke somit an dieser Stelle dicker sein wird. Liegt eine Verkürzung der Wadenmuskulatur und eine damit einhergehende Achillessehnenverdickung wegen dem häufigen tragen von Absatzschuhen vor, so kann der Fuss bzw. das Fuss-Modell in einem Winkel relativ zum entlang der Fusssohle verlaufenden Boden der Hohlform positioniert werden. Die so gefertigte Socke sorgt dann dafür, dass die Ferse relativ zum Fussballen erhöht ist.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, wird das Füllmaterial und/oder die Socke perforiert.
Dies kann, wie bereits beschrieben, mithilfe von Positionierungszapfen geschehen. Alternativ oder ergänzend können jedoch auch Perforationen durch das Füllmaterial bspw. mithilfe von einer Stanzzange, spitzen Gegenständen, wie z.B. Nadeln, und/oder durch (Wärme-)Strahlung (z.B. Laser) geschaffen werden. Die Perforationen sollten jedoch so angeordnet sein, dass sie die Funktionalität, sprich die polsternde Wirkung, der Socke nicht bzw. kaum beeinträchtigen. Perforationen, die mithilfe der Positionierungszapfen gebildet werden, entstehen normalerweise bereits in der Hohlform, sprich während dem mindestens teilweisen Ausfüllen der Hohlform mit einem Füllmaterial. Perforationen, die mithilfe anderer Werkzeuge erzeugt werden, können z.B. nach dem Entnehmen der "Rohsocke" oder nach dem Einbringen der Textilhülle (jeweils zweites Verfahren) bzw. nach dem Entnehmen der Socke (erstes Verfahren) oder gar nach dem Anbringen/Überstülpen der weiteren Textilhülle (betrifft beide Verfahren) gebildet werden. Die Perforation kann entsprechend vor oder nach dem Verbinden des Füllmaterials mit der Textilhülle oder der weiteren Textilhülle vorgenommen werden. Welche Variante bevorzugt ist, hängt unter anderem von der Wahl der Textilhülle/weiteren Textilhülle und deren Luftzirkulationseigenschaften ab. Die Idee der Perforationen ist es auch hier die Luftzirkulation zwischen dem Fuss des Trägers und seinem Schuhwerk zu verbessern. Bevorzugt befinden sich Perforationen in der Sohle, am Rist und/oder an den Seitenbereichen.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, wird das Füllmaterial mit der Textilhülle mindestens teilweise verbunden.

Für das erste Verfahren kann das mindestens teilweise Verbinden des Füllmaterials mit der Textilhülle z.B. erfolgen während die Hohlform mindestens teilweise mit dem Füllmaterial ausgefüllt wird, bevor die Socke aus der Hohlform entnommen wird, und/oder nachdem die Socke aus der Hohlform entnommen wurde. Das mindestens teilweise Verbinden kann direkt über das Füllmaterial erfolgen oder durch z.B. Verkleben, Laminieren oder Vernähen. Wird das Füllmaterial in die Hohlform eingebracht, so kann es z.B. auch die Textilhülle mindestens teilweise durchdringen. Erhärtet/trocknet/polymerisiert das Füllmaterial dann, so ist es durch das Gewebe der Textilhülle hindurch erhärtet/getrocknet/polymerisiert und sorgt somit für eine Verbindung zwischen Textilhülle und Füllmaterial. Alternativ für das erste Verfahren oder für das zweite Verfahren können das erhärtet/getrocknete/polymerisierte Füllmaterial und die Textilhülle nach der Entnahme mit einem Klebstoff mindestens teilweise verklebt, laminiert oder vernäht mit einem Garn oder Faden werden. Darüber hinaus könnte, je nach Wahl des Füllmaterials, dieses von Seite der Textilhülle her erwärmt werden (z.B. durch Strahlung, Heissluft...). Das textilhüllennahe Füllmaterial wird flüssig, durchdringt die Textilhülle mindestens teilweise und verfestigt sich nach Entfernen der Wärmequelle durch Abkühlen und verbindet sich so mit dem Füllmaterial an den durchdrungenen Stellen. Wird ein Fuss-Modell zur Herstellung der Socke verwendet, so kann dieses selbst als Wärmequelle oder zumindest zum Weiterleiten der Wärme verwendet werden und so für eine Verbindung zwischen Textilhülle und Füllmaterial sorgen bevor die Socke entnommen und die Hohlform gelöst würde. Findet das zweite Verfahren Anwendung, so erfolgt das mindestens teilweise Verbinden bevorzugt nachdem die Textilhülle in das Innere des Füllmaterials eingebracht wurde und/oder eine weitere Textilhülle übergezogen wurde.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, wird die Hohlform mindestens teilweises ausgekleidet mit einer weiteren Textilhülle, insbesondere bevor die Hohlform mindestens teilweise mit dem Füllmaterial ausgefüllt wird. Alternativ kann die weitere Textilhülle jedoch auch über das aus der Hohlform entnommene Füllmaterial gestülpt werden.
Vorteil einer weiteren bzw. zweiten Textilhülle ist, dass diese das Füllmaterial mindestens teilweise umschliesst und somit der Socke eine Optik verleiht, die vergleichbar ist zu derjenigen einer handelsüblichen Socke. Die weitere Textilhülle und das erhärtete/getrocknete/polymerisierte Füllmaterial können mindestens teilweise verbunden sein. Eine solche Verbindung kann im Wesentlichen analog zu der Verbindung zwischen der über den Fuss bzw. das Fuss-Modell gestülpten Textilhülle und dem Füllmaterial erreicht werden.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, ist das Fuss-Modell eine 3D Form eines menschlichen Fusses. Die 3D Form kann hergestellt werden indem der menschliche Fuss zum Erzeugen eines 3D Scans gescannt wird und dann, basierend auf dem 3D Scan, eine 3D Form des gescannten menschlichen Fusses erstellt wird. Das Erstellen der 3D Form kann z.B. mittels eines 3D Druckers erfolgen.
Die Aufnahme eines solchen 3D Scans kann bequem in einem Schuhgeschäft, beim Arzt oder Orthopäden, oder gar beim Träger selbst zu Hause stattfinden. Mehr als einen Laptop mit entsprechender Software und einen 3D Scanner, welche mittlerweile schon im handlichen Format erhältlich sind, braucht es nicht. Der 3D Scan kann dann z.B. per Mail an den Socken-Produzenten geschickt werden, welcher, bspw. mithilfe eines 3D Druckers, ein Fuss-Modell anfertigt und so ohne Beisein des Trägers einen für diesen angepassten Socken anfertigen kann.
Grundsätzlich bietet die Verwendung eines Fuss-Modells anstelle eines menschlichen Fusses noch den Vorteil, dass der Produzent der Socken das Fuss-Modell ganz einfach bei sich Lagern kann und, bei Eingang eines erneuten Auftrags des Trägers, einfach und unkompliziert weitere Socken herstellen kann.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, wird basierend auf dem 3D Scan die geeignete Grösse der Hohlform bestimmt.
Um den optimalen Tragekomfort erzielen zu können, muss die Hohlform ausreichend gross sein, sodass ein Zwischenraum zwischen Fuss bzw. Fuss-Modell entsteht, welcher gut mit Füllmaterial ausgefüllt werden kann. Jedoch sollte die Hohlform, sofern nicht zwingend erforderlich (bspw. aufgrund einer ausgeprägten anatomischen Anomalie des Fusses oder dergleichen), auch nicht zu gross sein, da der Träger sonst gezwungen ist eine Schuhnummer grösser zu tragen, was sich negativ auf den Halt im Schuh sowie auf die Optik auswirken kann.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, umfasst das mindestens teilweise Ausfüllen der Hohlform mit einem Füllmaterial das Aussparen des Zehenraums.
Dies kann erreich werden, indem die Hohlform im Zehenbereich mit einer Barriere ausgestattet ist, welche verhindert, dass das Füllmaterial weiter vordringt. Alternativ kann der Zehenbereich der Hohlform auch mit einer Art Platzhalter ausgefüllt sein, sodass dorthin ebenfalls kein Füllmaterial gelangt. Ist ein Fuss-Modell und kein menschlicher Fuss zum Einbringen in die Hohlform vorgesehen, so können sowohl die Hohlform selbst als auch das Fuss-Modell derart ausgebildet sein, dass der Zehenbereich in Gänze nicht vorhanden ist. Beim Fuss-Modell kann der Zehenbereich z.B. von vornherein nicht gefertigt oder nachträglich abgeschnitten worden sein. Die Hohlform liegt an der Fläche zum abgetrennten/nicht vorhandenen Zehenteil an, sodass hier kein Material gespritzt bzw. eingebracht wird. Die Textilhülle, welche vorgesehen ist in direktem Kontakt mit dem Fuss des Trägers zu stehen, und/oder die weitere Textilhülle, welche vorgesehen ist das äussere Erscheinungsbild der Socke zu verbessern, umfassen jedoch nichtsdestotrotz den Zehenbereich. Die (innere) Textilhülle formt eine gewöhnliche Socke, das Füllmaterial (z.B. Silikon) besteht nur dort, wo es wirklich gebraucht wird, und die (äussere) weitere Textilhülle umstülpt das Füllmaterial und bestenfalls die innere Textilhülle ebenfalls in Form einer gewöhnlichen Socke.
Die Begriffe Zehenraum, Zehenbereich und Zehenteil werden in dieser Anmeldung synonym verwendet.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, umfasst das Füllmaterial mindestens einen Kunststoff und/oder ein Silikon, welcher bzw. welches bevorzugt physikalisch, chemisch und/oder mechanisch aufgeschäumt ist.
Generell wird als Füllmittel bevorzugt ein Fluid verwendet, da dieses gut in die Hohlform eingebracht werden kann. Ein solches Fluid kann z.B. ein Schaum sein, welcher sich mit der Zeit oder z.B. chemisch oder physikalisch verfestigt, bspw. durch Polymerisation oder durch Verdampfen eines Lösemittels, und zwar in Form des ausgefüllten Zwischenraums zwischen Fuss bzw. Fuss-Modell und der Hohlform. Der Vorteil bei einem Schaum ist z.B., dass er eine geringe Dichte hat und somit leicht ist. Weiter ist der erhärtete/getrocknete/polymerisierte Schaum flexible und passt sich so den natürlichen Bewegungen beim Gehen optimal an. Ein solcher Schaum wird bspw. gebildet durch einen Kunststoff oder eine Mischung mehrerer Kunststoffe, welche bspw. chemisch, physikalisch oder mechanisch aufgeschäumt werden. Physikalisch aufgeschäumt werden kann in dem z.B. Druckluft, N₂ oder Wasserdampf in das flüssige Füllmittel eingeleitet werden. Beim chemischen Aufschäumen werden dem Füllmittel z.B. Treibmittel in Form von Pulver oder Granulat zugeführt. Das Treibmittel zersetzt sich dann unter Freisetzung von Gasen, wie z.B. CO₂. Mechanisches Aufschäumen hingegen erfolgt durch das Einschlagen eines Gases, meist Luft.
Ein ebenfalls vorteilhaftes Füllmaterial stellt Silikon dar, wie bspw. 2-Komponenten-Silikon. Dieses kann z.B. mittels Spritzverfahren in einer Mischung von bspw. zehn Teilen Silikon zu einem Teil Härter in die Hohlform eingebracht werden. Im Spritzverfahren gibt es eine Minimalschichtdicke und eine Maximalschichtdicke, wobei in deren Zwischenbereich gearbeitet wird. Die Minimalschichtdicke hängt von der Reissfestigkeit und der Polsterfähigkeit des Füllmaterials ab und beträgt bevorzugt zwischen 0.8 und 1.2 mm. Die Maximalschichtdicke hängt vom individuellen Fuss ab, sollte aber 3 mm nicht überschreiten aufgrund des Gewichts und Tragekomforts.
Bei der Wahl des Füllmaterials ist es vorteilhaft darauf zu achten, dass dieses gut hautverträglich, atmungsaktiv, nicht übermässig saugfähig und/oder hart und bestenfalls auch noch waschbar bei bspw. mindestens 30°C ist, zumindest von Hand, noch besser in der Maschine. Weiter ist von Vorteil, wenn das Füllmaterial, in dieser Ausführungsform also der Kunststoff und/oder das Silikon, nach dem mindestens teilweisen Erhärten/Trocknen/Polymerisieren, schneidbar ist, z.B. mit einem Messer, einer Schere oder einem Laser-Cutter. So kann die Socke passend für den Schuhtyp, für den sie der Träger vorgesehen hat, zugeschnitten werden. Möchte der Träger die Socke nicht in einem Stiefel, sondern doch lieber in einem Halbschuh oder Ballerina tragen, kann die Socke ganz einfach in die Form einer Sneakersocke oder eines Füsslings gebracht werden.
Ist das Füllmaterial schneidbar bzw. allgemein nachbearbeitbar, so kann auch die äussere Form der Socke nachbearbeitet werden für den Fall, dass diese nicht übereinstimmt mit der Innenform des Schuhs, in dem sie getragen werden soll. Optimal ist es jedoch, wenn verschiedene Paar Schuhe dieselbe Innenform besitzen und ein und dieselbe Socke so in mehreren Paar Schuhen getragen werden kann. Es könnte z.B. ein Standard eingeführt werden, der die Innenform von Schuhen vereinheitlicht.

In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, umfasst der mindestens eine Kunststoff Polyurethan (Edukt: Polyol, Isocyanat), Polystyrol (Edukt: Styrol), Polyvinylchlorid (Edukt: Vinylchlorid), Ethylen-Vinylacetat (Edukt: Ethen, Vinylacetat), Polyolefin (Edukt: Alken), insbesondere Polyethylen (Edukt: Ethen) oder Polypropylen (Edukt: Propen), oder eine Kombination daraus.
Diese Kunststoffe lassen sich gut Aufschäumen durch bekannte Verfahren, wie z.B. Schaumextrusion, Formteilprozess, das Styroporverfahren, das Thermoplast-Schamguss-Verfahren, oder das PUR-Schäumen. Insbesondere das PUR-Schäumen ist für das Verfahren geeignet, da dabei flüssige, reaktionsfähige Ausgangsstoffe verwendet werden. Der Kunststoff wird so gleichzeitig hergestellt und aufgeschäumt, und nicht wie bei den anderen Verfahren erst produziert und dann aufgeschäumt. Beim PUR-Schäumen wird ein Polyol mit Isocyanat und einem Treibmittel vermischt, wobei dann das Polyol mit dem Isocyanat in einer Polyaddition zu Polyurethanschaum reagieren und das Treibmittel für Gaseinschlüsse sorgt. Die gewünschte Eigenschaft der Socke kann z.B. eingestellt werden über die Wahl der Edukte. Beim PUR-Schäumen sorgen kurzkettige Polyole für einen stark vernetzten harten Schaumstoff, langkettige Polyole hingegen schaffen weiche bis elastische Schäume. Solche elastischen Schäume sind besonders geeignet, um den Tragekomfort zu erhöhen.

Die Verwendung eines Fuss-Modells bietet den Vorteil, dass eine grössere Anzahl an Kunststoffen verwendet werden kann und auch eine grössere Anzahl an Verfahren zum Verarbeiten dieser Kunststoffe eingesetzt werden können, insbesondere wenn dazu erhöhte Temperaturen nötig sind, als Ausgangsstoff reizende Chemikalien eingesetzt werden, Treibmittel oder Lösemitteldämpfe frei werden.
In einer erfindungsgemässen Ausführungsform des ersten bzw. des zweiten Verfahrens, welche mit jeder der bereits genannten Ausführungsformen und mit jeder der noch zu nennenden Ausführungsformen kombiniert werden kann, sofern nicht im Widerspruch dazu, umfasst das mindestens teilweise Ausfüllen der Hohlform mit einem Füllmaterial ein Variieren der Füllmaterialdicke.
Die Dicke des Füllmaterials kann z.B. in Abhängigkeit der Lage potentieller Druckpunkte des Fusses variiert werden. Die Druckstelle selbst bzw. diejenige Stelle des Fuss-Modells, welche stellvertretend für diese steht, wird bspw. lediglich mit einer Standarddicke (z.B. im Bereich von 0.8 bis 1.2 mm) an Füllmaterial versorgt, wohingegen um die Druckstelle herum mehr Füllmaterial hinzugefügt, und somit eine höhere Materialdicke (z.B. im Bereich von 1.2 bis 3.0 mm) erreicht, um den Druck auf eine grösseres Gebiet zu verteilen und so das Druckgefühl verringern bzw. neutralisieren zu können.

In einem weiteren Aspekt betrifft die Erfindung eine Socke, welche nach einem der beschriebenen Verfahren zum Herstellen einer Socke, nach einer beschriebenen Ausführungsform dieser Verfahren, oder nach einer Kombination mehrerer der beschriebenen Ausführungsformen dieser Verfahren hergestellt wurden.

In einem wiederum weiteren Aspekt betrifft die Erfindung eine Socke, welche eine Textilhülle und ein Füllmaterial umfasst, wobei das Füllmaterial die Textilhülle mindestens teilweise umgibt. Das Füllmaterial besitzt die Form eines Schuhs und umgibt mindestens teilweise einen Raum welcher die Form eines Fusses oder eines Fuss-Modelles aufweist. Das Füllmaterial kann mindestens teilweise mit der Textilhülle verbunden sein, insbesondere lösbar verbunden.

In einer erfindungsgemässen Ausführungsform der Socke, welche mit jeder der bereits genannten Ausführungsformen und mit jeder der noch zu nennenden Ausführungsformen kombiniert werden kann, sofern nicht im Widerspruch dazu, umfasst die Socke eine weitere Textilhülle, welche das Füllmaterial mindestens teilweise umgibt. Die weitere Textilhülle kann mindestens teilweise mit dem Füllmaterial verbunden sein, insbesondere lösbar verbunden.

Ein weiterer Aspekt der Erfindung betrifft einen Schuh mit einer erfindungsgemässen Socke, wobei die äussere Form der Socke das Gegenstück zur inneren Form des Schuhs bildet.

Ausführungsbeispiele der vorliegenden Erfindung werden nachstehend anhand von Figuren noch näher erläutert. Es zeigen
Fig. 1a ein Flussdiagramm des ersten erfindungsgemässen Verfahrens zum Herstellen einer Socke;
Fig. 1b ein Flussdiagramm des zweiten erfindungsgemässen Verfahrens zum Herstellen einer Socke;
Fig. 2 einen schematischen Querschnitt einer Momentaufnahme des erfindungsgemässen Verfahrens;
Fig. 3a einen schematischen Querschnitt durch eine erfindungsgemässe Socke;
Fig. 3b einen schematischen Querschnitt durch eine Ausführungsform einer erfindungsgemässen Socke;
Fig. 4 einen schematischen Querschnitt durch eine weitere Ausführungsform einer erfindungsgemässen Socke;
Fig. 5a einen schematischen Querschnitt durch eine Hohlform, welche zum Herstellen einer erfindungsgemässen Socke verwendet werden kann;
Fig. 5b einen schematischen Querschnitt durch eine weitere Hohlform, welche zum Herstellen einer erfindungsgemässen Socke verwendet werden kann;
Fig 5c einen schematischen Querschnitt durch eine wiederum weitere Hohlform, welche zum Herstellen einer erfindungsgemässen Socke verwendet werden kann;
Fig. 6 einen schematischen Querschnitt durch eine Hohlform ohne Zehenteil, welche zum Herstellen einer erfindungsgemässen Socke verwendet werden kann;
Fig. 7a einen schematischen Ausschnitt einer erfindungsgemässen Socke;
Fig. 7b einen weiteren schematischen Ausschnitt einer erfindungsgemässen Socke; und
Fig. 8 eine weitere erfindungsgemässe Socke.

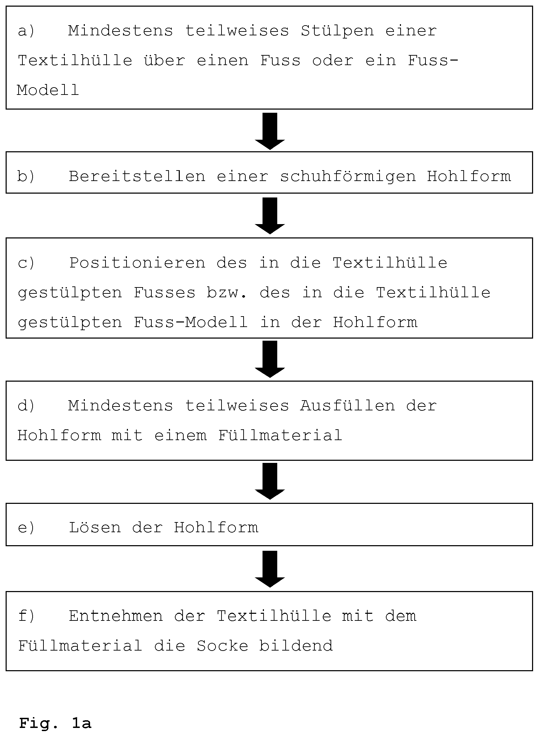

In Figur 1a zu sehen ist ein Flussdiagramm, welches die einzelnen Schritte eines ersten Verfahrens zum Herstellen einer Socke wiedergibt. Bei dem dargestellten Verfahren wird:
a) eine Textilhülle mindestens teilweise über einen Fuss oder ein Fuss-Modell gestülpt;
b) eine schuhförmige Hohlform bereitgestellt;
c) der in die Textilhülle gestülpte Fuss bzw. das in die Textilhülle gestülpte Fuss-Modell in der Hohlform positioniert;
d) die Hohlform mindestens teilweise mit einem Füllmaterial ausgefüllt;
e) die Hohlform gelöst;
f) die Textilhülle mit dem Füllmaterial die Socke bildend entnommen.

Die Schritte a) bis f) können in oben genannter Reihenfolge ausgeführt werden, müssen aber nicht. Beispielsweise kann die Reihenfolge der Schritte a) und b) permutiert werden. Schritt c) z.B. kann auch kontrolliert ausgeführt werden, sprich der in die Textilhülle gestülpte Fuss bzw. das in die Textilhülle gestülpte Fuss-Modell wird kontrolliert in der Hohlform positioniert.
Weiter kann das Verfahren z.B. den zusätzlichen Schritt g) Mindestens teilweises Verbinden des Füllmaterial mit der Textilhülle umfassen. Dieser wird bspw. während oder nach Schritt d) ausgeführt. Alternativ kann Schritt g) aber auch erst nach Schritt e) oder f) ausgeführt werden.
Weiter kann das Verfahren z.B. den zusätzlichen Schritt h) mindestens teilweises Auskleiden der Hohlform mit einer weiteren Textilhülle umfassen. Schritt h) kann insbesondere vor Schritt d) ausgeführt werden.
Darüber hinaus kann das Verfahren z.B. die Schritte i) Scannen eines menschlichen Fusses zum Erzeugen eines 3D Scans und j) Erstellen eines Fuss-Modells des gescannten menschlichen Fusses basierend auf dem 3D Scan, bspw. mittels eines 3D Druckers, umfassen. Der Schritt i) wird vor dem Schritt j) ausgeführt, wobei beide Schritte bevorzugt vor dem Schritt a) ausgeführt werden.

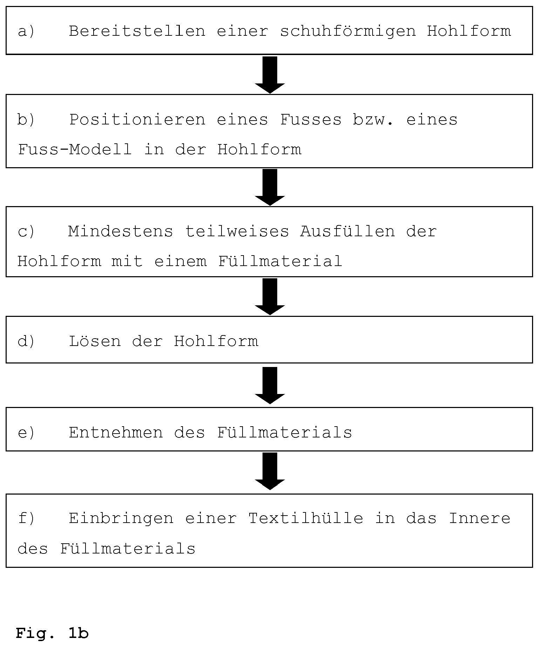

In Figur 1b zu sehen ist ein Flussdiagramm, welches die einzelnen Schritte eines zweiten Verfahrens zum Herstellen einer Socke wiedergibt. Bei dem dargestellten Verfahren wird:
a) eine schuhförmige Hohlform bereitgestellt;
b) ein Fuss bzw. ein Fuss-Modell in der Hohlform positioniert;
c) die Hohlform mindestens teilweise mit einem Füllmaterial ausgefüllt;
d) die Hohlform gelöst;
e) das Füllmaterial entnommen;
f) eine Textilhülle in das Innere des Füllmaterials eingebracht.
Die Schritte a) bis f) werden bevorzugt in der oben genannten Reihenfolge ausgeführt. Schritt b) kann optional bspw. ein kontrolliertes Positionieren mitumfassen.
Weiter kann das Verfahren z.B. den zusätzlichen Schritt g) Mindestens teilweises Verbinden des Füllmaterial mit der Textilhülle umfassen. Dieser wird bevorzugt während oder nach Schritt f) ausgeführt. Weiter kann das Verfahren z.B. den zusätzlichen Schritt h) Mindestens teilweises Überstülpen einer weiteren Textilhülle über das Füllmaterial umfassen. An dieses kann ein weiteres Mal der Schritt g) anschliessen, um die weitere Textilhülle ebenfalls mit dem Füllmaterial zu verbinden.
Darüber hinaus kann das Verfahren z.B. die Schritte i) Scannen eines menschlichen Fusses zum Erzeugen eines 3D Scans und j) Erstellen eines Fuss-Modells des gescannten menschlichen Fusses basierend auf dem 3D Scan, bspw. mittels eines 3D Druckers, umfassen. Der Schritt i) wird vor dem Schritt j) ausgeführt, wobei beide Schritte bevorzugt vor dem Schritt a) ausgeführt werden.

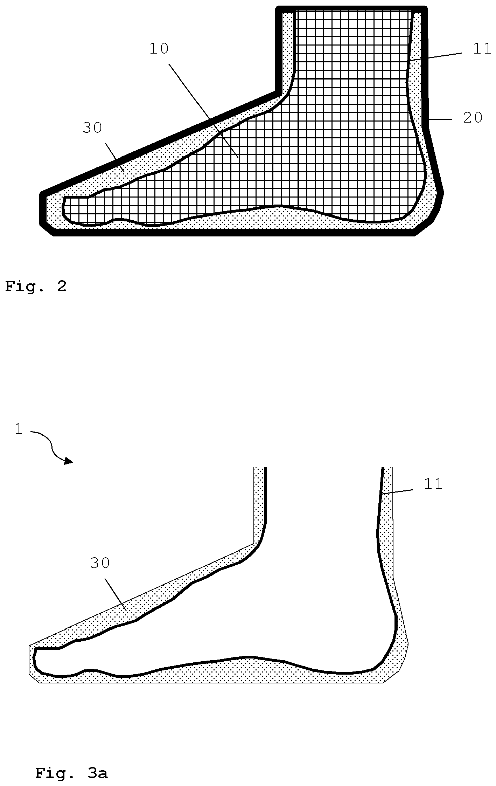

In Figur 2 zu sehen ist eine Momentaufnahme des erfindungsgemässen Verfahrens aufgenommen nach den Schritten a), b), c) und d), jedoch vor den Schritten e) und f). Erkennbar ist eine Hohlform 20, in welche ein Fuss-Modell 10, über welches eine Textilhülle 11 gestülpt ist, positioniert ist. Der Zwischenraum, welcher gebildet ist zwischen Hohlform 20 und Fuss-Modell 10, ist aufgefüllt mit Füllmaterial 30. Bei der dargestellten Hohlform 20 handelt es sich um eine zweiteilige Hohlform, welche durch das Verbinden der beiden Teile vollständig verschlossen wird. Der eine Teil der Hohlform 20 umfasst z.B. die zum Innenfuss gehörende Hälfte des Fusses bzw. des Fuss-Modells und der andere Teil umfasst die zum Aussenfuss gehörende Hälfte des Fusses bzw. des Fuss-Modells.
Alternativ könnte z.B. auch eine einteilige Hohlform, welche eine grosse Öffnung zum Einbringen des Fusses bzw. des Fuss-Modelles aufweist, mit einem Deckel verschlossen werden (nicht gezeigt).

Figur 3a zeigt einen Querschnitt durch eine erfindungsgemässe Socke 1. Diese umfasst eine Textilhülle 11, welche umgeben ist von Füllmaterial 30. Das Füllmaterial 30 mit der Textilhülle 11 bilden innen die Form eines Fusses nach und nach aussen besitzt das Füllmaterial 30 die Form des Inneren eines Schuhs (nicht gezeigt). Die Textilhülle 11 und das Füllmaterial 30 können getrennt, teilweise verbunden, oder durchgehend bzw. vollständig verbunden sein. Eine mindestens teilweise

Verbindung hat den Vorteil, dass die relative Position von Textilhülle 11 zu Füllmaterial 30 fixiert ist und sich dadurch keine Druckstellen z.B. durch Falten in der Textilhülle 11, hervorgerufen durch Verrutschen, bilden können. Sind die Textilhülle 11 und das Füllmaterial 30 hingegen nicht verbunden, erleichtert dies die Reinigung der Socke. Zwar ist das Füllmaterial 30 bevorzugt ebenfalls waschbar, jedoch ist es die Textilhülle 11, die im direkten Kontakt der Haut steht und somit schneller verschmutzt. Alternativ können Textilhülle 11 und Füllmaterial 30 mindestens teilweise lösbar verbunden sein, z.B. durch einen Klettverschluss.

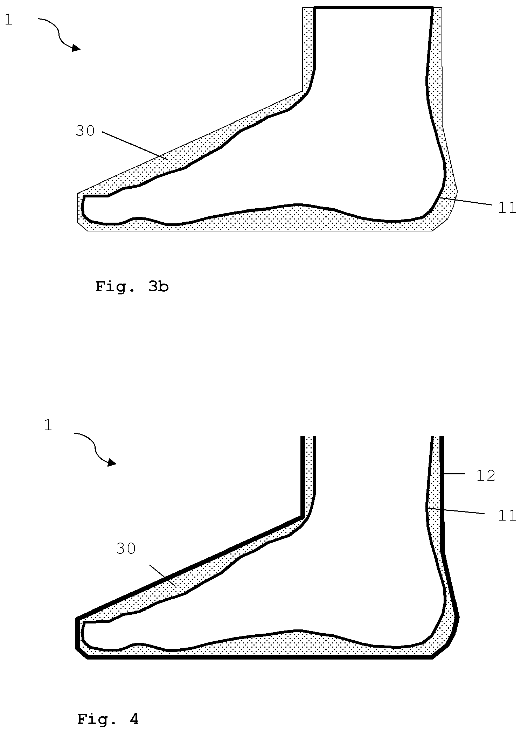

Die in Figur 3b gezeigte Socke 1 unterscheidet sich von der in Figur 3a beschriebenen Socke dahingehend, dass sie die Form einer Sneakersocke aufweist und so besonders geeignet ist für das Tragen in Sport- oder Halbschuhen.

Figur 4 zeigt einen Querschnitt durch eine Ausführungsform einer erfindungsgemässen Socke 1. Diese unterscheidet sich von der in Fig. 3 gezeigten Socke durch eine weitere Textilhülle 12, welche das Füllmaterial 30 umgibt. Die weitere Textilhülle 12 und das Füllmaterial 30 können getrennt, teilweise verbunden, oder durchgehend bzw. vollständig verbunden sein, auch lösbar verbunden. Vorteil einer mindestens teilweisen Verbindung ist ebenfalls das Fixieren der Positionen relativ zueinander und somit das Verhindern vom Verrutschen der weiteren Textilhülle 12. Der Halt im Schuh (nicht gezeigt) kann durch eine mindestens teilweise Fixierung ebenfalls verbessert werden. Sind die weitere Textilhülle 12 und das Füllmaterial 30 hingegen nicht verbunden oder lösbar verbunden, so kann die weitere Textilhülle 12 nach Bedarf und Geschmack gewechselt werden. Z.B. können diverse weitere Textilhüllen in verschiedenen Farben bereitgestellt werden und der Träger kann so das äussere Erscheinungsbild der Socke 1 an sein restliches Outfit anpassen.

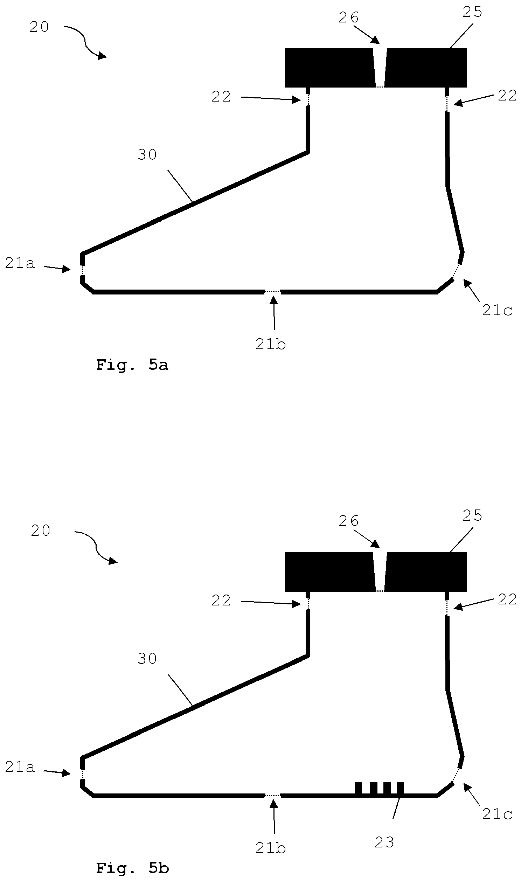

In Fig 5a gezeigt ist eine Hohlform 20 zum Herstellen einer erfindungsgemässen Socke, welche mithilfe eines Deckels 25 verschlossen werden kann. Die Hohlform weist mindestens eine Einlassöffnung 21 zum Einfüllen des Füllmaterials (hier nicht gezeigt) auf. In der gezeigten Ausführungsform umfasst die Hohlform 20 drei Einlassöffnungen 21. Eine Einlassöffnung 21a befindet sich an der Fussspitze, eine Einlassöffnung 21b befindet sich an der Fusssohle und eine Einlassöffnung 21c befindet sich an der Ferse. Die Einlassöffnungen können verschliessbar sein und/oder mit einem Rückflussventil ausgestattet sein, in der Figur angezeigt durch die gestrichelten Linien. Weiter kann die Hohlform 20 mindestens eine Auslassöffnung 22 zum Auslassen von überschüssigem Füllmaterial (nicht gezeigt), aber auch zum Auslassen der aus der Hohlform 20 verdrängten Luft während dem Einfüllvorgang, umfassen. Die gezeigte Ausführungsform besitzt zwei Auslassöffnungen 22 im Grundkörper und eine Auslassöffnung 26 im Deckel 25 der Hohlform 20. Die Auslassöffnungen 22, 26 können mit einem Überdruckventil ausgestattet sein, angedeutet durch die gestrichelten Linien.

Die in Figur 5b gezeigte Hohlform 20 unterscheidet sich durch die in Figur 5a beschriebene Hohlform durch die auf der Innenseite der Hohlform vorgegebene Struktur, welche z.B. durch Zapfen 23 gebildet werden kann. Eine Struktur bezeichnet alles, was sich von einer glatten Oberfläche unterscheidet und muss nicht zwangsläufig durch Zapfen gebildet werden, sondern kann auch durch Ausnehmungen oder sonstige strukturgebende Elemente erzeugt werden.
Die gezeigte Innenseite der Hohlform ist folglich nicht glatt, sondern strukturiert. An den Stellen, an denen die Zapfen 23 in der Hohlform 20 angeordnet sind, befindet sich in der mit dieser Hohlform 20 hergestellten Socke kein Füllmaterial. Dementsprechend besitzen diese Stellen andere Eigenschaften, können z.B. weicher, verformbarere oder elastischer sein. Beispielsweise kann der Teil der Socke, welcher sich später unterhalb der Ferse und den Fussballen befindet so weicher ausgebildet werden, als der Teil der Socke, welcher sich später unterhalb des Fussbettes befindet.

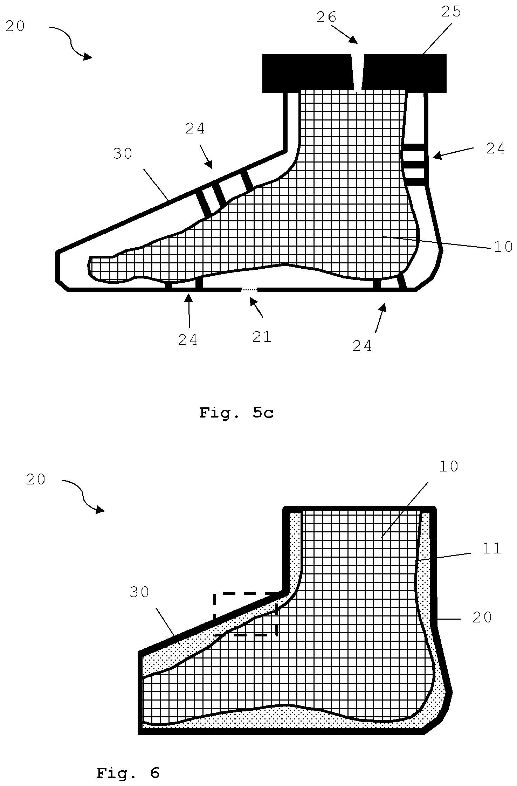

Die in Figur 5c gezeigte Hohlform 20 enthält ein Fuss-Modell 10, sodass die Funktionsweise und Position der Positionierungszapfen 24 besser illustriert werden kann. Die Positionierungszapfen 24 unterscheiden sich von den Zapfen aus Figur 5b, indem sie so ausgelegt sind, dass sie tatsächlich an das Fuss-Modell 10 anschliessen und so dafür sorgen, dass an den Kontaktstellen Fuss-Modell/Positionierungszapfen Füllmaterial-Aussparungen entstehen, die später Perforationen in der Socke bilden. Im hier gezeigten Beispiel treten die Positionierungszapfen 24 in Dreiergruppen am Rist und oberhalb der Ferse auf, und in Zweiergruppen an der Ferse und im Bereich des Fussballens. Die Hohlform 20 ist mit einem Deckel 25 verschlossen, welcher eine Öffnung 26, bspw. mit einem Überdruckventil versehen, zum Entlüften aufweist. Der Einlass 21 für das Füllmaterial befindet sich unterhalb des den Mittelfuss repräsentierenden Teils des Fuss-Modells 10.

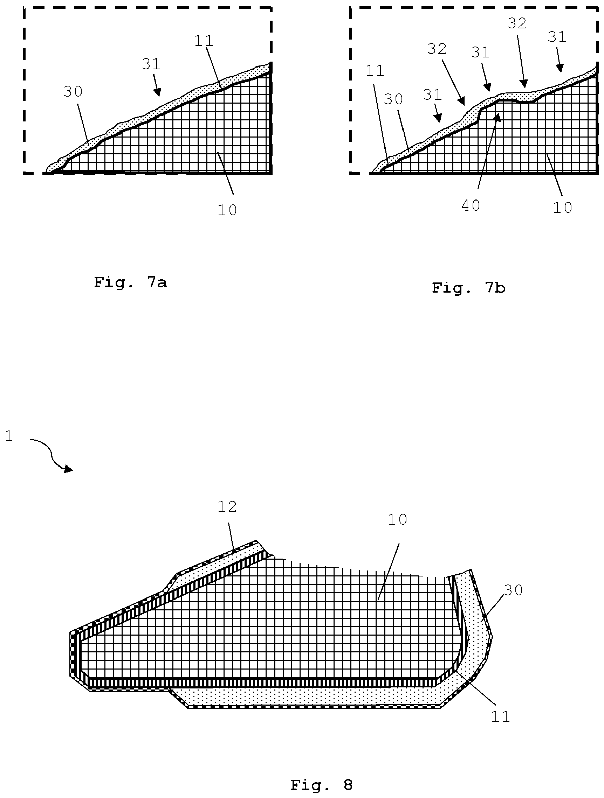

In Figur 6 gezeigt ist eine Ausführungsform einer Hohlform 20, welche keinen Zehenteil aufweist. Keinen Zehenteil bedeutet beispielsweise, dass die Hohlform 20 endet, wo der Vorfuss beginnen bzw. die Fussknöchelreihe eines Fusses enden würde. Eine solche Hohlform sollte verwendet werden zusammen mit einem Fuss-Modell 10, welches ebenfalls keinen Zehenteil aufweist. Solch ein Fuss-Modell 10 steht dann optimalerweise in der Hohlform 20 an und verhindert, dass Füllmaterial 30 an dieses Ende gelangt. Weiter ist mittels eines gestrichelt gezeichneten Rechtecks angezeigt, wo sich der in den Figuren 7a und 7b gezeigte Ausschnitt befindet.

Die Figuren 7a und 7b zeigen jeweils einen Ausschnitt einer erfindungsgemässen Socke, welche über einen Fuss 10 gestülpt ist. Die Figuren 7a und 7b stellen keine Vergrösserung des Ausschnitts der Figur 6 dar, sondern diese gibt lediglich die Lage des Ausschnitts an. Die Socken umfassen jeweils eine Hülle 11 und gehärtetes Füllmaterial 30, welches die Hülle 11 mindestens teilweise umgibt. Der in Figur 7a gezeigte Fuss 10 weist keine Anomalie auf, sodass die Dicke des Füllmaterials 30 homogen ist und im Wesentlichen entlang des gesamten Fusses gleichbleibt und einer Standarddicke entspricht. Die Standarddicke liegt bevorzugt im Bereich von 0.8 bis 1.2 mm und beträgt bspw. 0.80, 0.85, 0.9, 0.95, 1.00, 1.05, 1.10, 1.15 oder 1.20 mm. Der in Figur 7b gezeigte Fuss 10 hingegen weist eine Druckstelle 40 auf. Um diese zu entlasten, entspricht die Füllmaterialdicke auf der Druckstelle 40 ebenfalls einer Standarddicke, im direkten Umkreis der Druckstelle 40 hingegen liegt eine erhöhte Füllmaterialdicke vor, eine Zusatzdicke sozusagen. Die Zusatzdicke liegt bevorzugt im Bereich von 1.2 bis 3.0 mm, insbesondere im Bereich von 1.5 bis 2.5 mm, und beträgt bspw. 1.3, 1.4, 1.5, 1.6, 1.7, 1.8, 1.9, 2.0, 2.1, 2.2, 2.3, 2.4, 2.5, 2.6, 2.7, 2.8, 2.9 oder 3.0 mm. Im weiteren Umkreis der Druckstelle 40 wiederum weist die Socke erneut die Standarddicke auf. Das Füllmaterial 30 ist bspw. ein Silikon.
In Figur 8 gezeigt ist eine Ausführungsform einer erfindungsgemässen Socke 1. Diese umfasst eine Textilhülle 11, welche in direktem Kontakt mit dem Fuss 10 des Trägers steht. Weiter umfasst die Socke 1 eine Schicht aus gehärtetem/getrockneten/polymerisierten Füllmaterial 30. Dieses umgibt jedoch nicht die gesamte Textilhülle 11, sondern lediglich den Bereich des Mittelfusses und des Rückfusses. Der Zehenbereich (in diesem Beispiel der gesamte Vorfuss) weist keine Schicht aus Füllmaterial 30 auf. Die Socke weist darüber hinaus eine weitere Textilhülle 12 auf. Diese umschliesst das Füllmaterial 30 und die Textilhülle 11. Die Textilhülle 11, das Füllmaterial 30 und die weitere Textilhülle sind mindestens teilweise miteinander verbunden, beispielsweise indem sie entlang ihres Abschlusses vernäht sind. Mindestens teilweise meint hier einerseits, dass eine Verbindung nur abschnittsweise hergestellt ist, andererseits aber auch, dass nicht alle Bestandteile des Sockens unmittelbar miteinander verbunden sein müssen. Beispielsweise kann die Textilhülle 11 mit dem Füllmaterial 30 verbunden sein und das Füllmaterial 30 wiederum mit der weiteren Textilhülle 12 verbunden sein, eine direkte Verbindung zwischen Textilhülle 11 und weiterer Textilhülle 12 existiert aber nicht.

**Bezugszeichenliste**

| | |
|---|---|
| 1 | Socke |
| 10 | Fuss bzw. Fuss-Modell |
| 11 | Textilhülle |
| 12 | Weitere Textilhülle |
| 20 | Hohlform |
| 21 | Einlassöffnung |
| 22 | Auslassöffnung |
| 23 | Zapfen |
| 24 | Positionierungszapfen |
| 25 | Deckel |
| 26 | Auslassöffnung Deckel |
| 30 | Füllmaterial |
| 31 | Füllmaterial normale Dicke |
| 32 | Füllmaterial Zusatzdicke |
| 40 | Druckstelle |

## Patentansprüche

1. Verfahren zum Herstellen einer Socke (1), wobei:
- eine schuhförmige Hohlform (20) bereitgestellt wird;
- ein Fuss (10) bzw. ein Fuss-Modell (10) in der Hohlform (20) positioniert wird;
- die Hohlform (20) mindestens teilweise mit einem Füllmaterial (30) ausgefüllt wird;
- die Hohlform (20) gelöst wird;
- das Füllmaterial (30) entnommen wird; und
- eine Textilhülle (11) in das Innere des Füllmaterials (30) eingebracht wird.

2. Verfahren zum Herstellen einer Socke (1), wobei:
- eine Textilhülle (11) mindestens teilweise über einen Fuss (10) oder ein Fuss-Modell (10) gestülpt wird;
- eine schuhförmige Hohlform (20) bereitgestellt wird;
- der in die Textilhülle (11) gestülpte Fuss (10) bzw. das in die Textilhülle (11) gestülpte Fuss-Modell (10) in der Hohlform (20) positioniert wird;
- die Hohlform (20) mindestens teilweise mit einem Füllmaterial (30) ausgefüllt wird;
- die Hohlform (20) gelöst wird;
- die Textilhülle (11) mit dem Füllmaterial (30) die Socke (1) bildend entnommen wird.

3. Verfahren nach Anspruch 1 oder Anspruch 2, wobei:
- der Fuss (10) bzw. das Fuss-Modell (10) oder der in die Textilhülle (11) gestülpte Fuss (10) bzw. das in die Textilhülle (11) gestülpte Fuss-Modell (10) kontrolliert in der Hohlform (20) positioniert wird.

4. Verfahren nach Anspruch 3, wobei das kontrollierte Positionieren den Einsatz von Positionierungszapfen im Inneren der Hohlform (20) umfasst.

5. Verfahren nach einem der Ansprüche 1 bis 4, wobei das mindestens teilweise Ausfüllen der Hohlform (20) mit dem Füllmaterial (30) ein Aussparen des Zehenbereichs umfasst.

6. Verfahren nach einem der Ansprüche 1 bis 5, wobei das mindestens teilweise Ausfüllen der Hohlform (20) mit dem Füllmaterial (30) ein Variieren der Füllmaterialdicke umfasst.

7. Verfahren nach einem der Ansprüche 1 bis 6, wobei:
- mindestens eine Perforation durch das Füllmaterial (30), die Textilhülle (11) und/oder eine weitere Textilhülle (12) erzeugt wird.

8. Verfahren nach einem der Ansprüche 1 bis 7, wobei:
- die Hohlform (20) mindestens teilweises ausgekleidet wird mit einer weiteren Textilhülle (12), insbesondere bevor die Hohlform (20) mindestens teilweise mit dem Füllmaterial (30) ausgefüllt wird; oder
- dem aus der Hohlform (20) entnommenen Füllmaterial (30) mindestens teilweise eine zweite Textilhülle (12) übergestülpt wird.

9. Verfahren nach einem der Ansprüche 1 bis 8, wobei:
- das Füllmaterial (30) mit der Textilhülle (11) und/oder der weiteren Textilhülle (12) verbunden wird.

10. Verfahren nach einem der Ansprüche 1 bis 9, wobei das Fuss-Modell (10) eine 3D Form eines menschlichen Fusses ist, insbesondere hergestellt indem:
- der menschliche Fuss zum Erzeugen eines 3D Scans gescannt wird;
- basierend auf dem 3D Scan die 3D Form des gescannten menschlichen Fusses erstellt wird, bevorzugt mittels eines 3D Druckers.

11. Verfahren nach einem der Ansprüche 1 bis 10, wobei das Füllmaterial (30) mindestens einen Kunststoff und/oder ein Silikon umfasst, welcher bzw. welches bevorzugt physikalisch, chemisch und/oder mechanisch aufgeschäumt ist.

12. Socke (1) hergestellt nach einem der Ansprüche 1 bis 11.

13. Socke (1) umfassend eine Textilhülle (11) und ein Füllmaterial (30), wobei das Füllmaterial (30) die Textilhülle (11) mindestens teilweise umgibt und bevorzugt mindestens teilweise mit der Textilhülle (11) verbunden ist, und wobei das Füllmaterial (30) die Form eines Schuhs besitzt und mindestens teilweise einen Raum umgibt, welcher die Form eines Fusses (10) oder eines Fuss-Modelles (10) aufweist.

14. Socke (1) nach Anspruch 13 umfassend eine weitere Textilhülle (12), welche das Füllmaterial (30) mindestens teilweise umgibt und bevorzugt mindestens teilweise mit dem Füllmaterial (30) verbunden ist.

15. Schuh mit einer Socke (1) nach einem der Ansprüche 12 bis 14, wobei die äussere Form der Socke (1) das Gegenstück zur inneren Form des Schuhs bildet.
